# EUROPÄISCHE PATENTSCHRIFT

(11) **EP 3 581 628 B1**
(45) Veröffentlichungstag und Bekanntmachung des Hinweises auf die Patenterteilung: **09.12.2026**
(21) Anmeldenummer: 18177086.8
(22) Anmeldetag: 11.06.2018
(51) Int. Cl.: C09D 17/00, C09D 7/65, C09D 7/61, C09D 7/40, C09D 7/45, C09D 7/41, C09D 7/43, C09B 67/20

(54) **TROCKENPRÄPARATION FÜR EINE WÄSSRIGE ODER LÖSEMITTELHALTIGE ZUSAMMENSETZUNG FÜR EIN ABTÖNSYSTEM, VERFAHREN ZUR HERSTELLUNG DER TROCKENPRÄPARATION UND DESSEN VERWENDUNG FÜR DIE HERSTELLUNG EINER WÄSSRIGEN ODER LÖSEMITTELHALTIGEN ZUSAMMENSETZUNG**
DRY PREPARATION FOR AN AQUEOUS OR SOLVENT-CONTAINING COMPOSITION FOR A TINTING SYSTEM, METHOD FOR PRODUCING THE DRY PREPARATION AND ITS USE IN THE PRODUCTION OF AN AQUEOUS OR SOLVENT COMPOSITION
PRÉPARATION SÈCHE POUR UNE COMPOSITION AQUEUSE OU CONTENANT UN SOLVANT POUR UN SYSTÈME DE NUANÇAGE, PROCÉDÉ DE PRODUCTION DE LA PRÉPARATION SÈCHE ET SON UTILISATION DESTINÉE À LA PRODUCTION D'UNE COMPOSITION AQUEUSE OU CONTENANT UN SOLVANT

(43) Veröffentlichungstag der Anmeldung: 18.12.2019
(73) Patentinhaber: DAW SE, 64372 Ober-Ramstadt (DE)
(72) Erfinder: PTATSCHEK, Volker, 63773 Goldbach (DE); LINGELBACH, Heike, 63110 Rodgau (DE); WEINHOLD, Petra, 64572 Büttelborn (DE)
(74) Vertreter: Michalski Hüttermann & Partner mbB

(56) Entgegenhaltungen:
- EP-A1- 3 333 231
- WO-A1-98/38253
- WO-A1-99/65995
- DE-A1- 102014 206 785
- DE-A1- 102015 203 685
- DE-A1- 102016 002 221
- US-A- 2 068 066
- US-A- 5 578 668

## Beschreibung

Die vorliegende Erfindung betrifft eine Trockenpräparation, insbesondere Trockenpigmentpräparation, für eine wässrige oder lösemittelhaltige Zusammensetzung, insbesondere Farbtonzusammensetzung oder Extenderzusammensetzung, für ein Abtönsystem. Ferner betrifft die Erfindung die Verwendung der erfindungsgemäßen Trockenpräparation für die Herstellung mindestens einer wässrigen oder lösemittelhaltigen Zusammensetzung, insbesondere Farbtonzusammensetzung oder Extenderzusammensetzung. Schließlich betrifft die Erfindung ein Verfahren zur Herstellung der wässrigen oder lösemittelhaltigen Zusammensetzung für ein Abtönsystem.

Anstrichfarben sowie gefärbte Putze sind in vielfältigen Farben erhältlich. Dies geschieht regelmäßig dadurch, dass man farbige Abtönpasten mit einer sogenannten Abtönbasis, welche regelmäßig in weißer oder transparenter und seltener in bunter Form vorliegt, vermengt. Auf diese Weise müssen Farben und Putze unterschiedlicher Farbschattierungen nicht in größeren Mengen bevorratet werden. Hierdurch verringert man die Gefahr, zu lange gelagerte Chargen wegen eines zwischenzeitlich eingetretenen Schimmelbefalls verwerfen zu müssen. Bei den genannten abgetönten Farben und Putzen stellen die Abtönbasen im Allgemeinen den mengenmäßig größten Anteil der genannten Mischungen dar. Für die Farbeinstellung gewünschter Anstrichfarben bedient man sich heute regelmäßig softwaregesteuerter Abtönmaschinen, in denen eine Vielzahl an Abtönpasten unterschiedlicher Farbe vorliegt. Sobald eine solche Abtönpaste in eine derartige Abtönmaschine eingefüllt wird, besteht in besonderem Maße die Gefahr der Schimmelbildung und des Bakterienbefalls. Denn einerseits kommen in Abtönpasten üblicherweise vielfältigste organische Verbindungen zum Einsatz und andererseits sind in der Umgebungsluft Schimmelsporen und Bakterien regelmäßig ubiquitär vorhanden. Insbesondere bei solchen Abtönpasten, die für Farbtöne verwendet werden, die z.B. nicht im Trend liegen und demgemäß über eine längere Zeiträuem in der Abtönmaschine verweilen, kann es dazu kommen, dass größere Mengen an Abtönpastenmaterial auf Grund von Schimmelbildung oder mikrobiellem Befall entsorgt und die Abtönmaschine komplett gereinigt werden muss. Insbesondere im Fall besonders starker Kontamination kann sogar ein Austausch einzelner Bauteile der Abtönanlage bis hin zum Ersatz von kompletten Pastenkreisläufen, z.B. umfassend Pumpen, Vorratsschläuche, etc. notwendig werden.

Denn auch die Lagerstabilität wasserbasierter Pigmentpasten ist begrenzt. Zur Gewährleistung der Haltbarkeit werden Abtönpasten häufig organische Biozide zugemischt. Durch diesen Zusatz an Bioziden kann zwar die Schimmelbildung weitgehend zurückgedrängt werden, allerdings kann dies zu raumlufthygienischen Problemen führen. Dass trotz des Einsatzes von Bioziden mitunter sogar verschärft Schimmelbefall beobachtet wird, ist dem Umstand geschuldet, dass die heutigen Abtönsysteme sowie die daraus resultierenden Beschichtungen vielfach emissions- und lösemittelfrei, d.h. mit VOC-Gehalten < 1g/Liter rezeptiert werden. Neben Schimmelbildung und dem mikrobiellen Befall können mit langen Standzeiten im Gebinde oder in der Tönmaschine bei Flüssigpigmentpräparationen auch Sedimentation und Synärese auftreten. Auch gehen mit langen Standzeiten mitunter auch rheologische Probleme wie die Pasteneindickung einher. Im Ergebnis resultieren aus den genannten Problemen ein nicht mehr reprodzierbares Abtönverhalten oder gar Maschinenausfäle,

Lagerstabile Pigmentpräparationen zur Herstellung von Farben sind beispielsweise in der WO 98/38253 Al beschrieben,

Der vorliegenden Erfindung lag daher die Aufgabe zugrunde, auf Abtönmaterial zurückgreifen zu können, die nicht mehr mit den Nachteilen des Stands der Technik behaftet sind und die insbesondere unproblematisch über längere Zeiträume gelagert werden können. Auch lag der Erfindung die Aufgabe zugrunde, Abtönmaterialien zur Verfügung zu stellen, mit denen sich reproduzierbar ein vorgegebenes Abtönergebnis erzielen lässt. Schließlich lag der Erfindung die Aufgabe zugrunde, hochwertige Abtönmaterialien verfügbar zu machen, die gleichwohl modernen ökologischen Standards genügen.

Demgemäß wurde eine Trockenpräparation, insbesondere Trockenpigmentpräparation, für eine wässrige oder lösemittelhaltige Zusammensetzung, insbesondere Farbtonzusammensetzung oder Extenderzusammensetzung, für ein Abtönsystem gefunden, bestehend aus oder enthaltend
a) mindestens ein Pigment und/oder mindestens einen Füllstoff,
b) mindestens ein Netz- und/oder Dispergiermittel, ausgewählt aus der Gruppe bestehend aus Polycarboxylaten, Polyphosphaten, Polyetherphosphaten, Polycarbonsäurepolymeren, Acrylblockcopolymeren, ethoxylierten Fettalkoholen, nichtionischen gesättigten langkettigen Alkoholen, Fettalkoholsulfaten, Alkylphosphonaten, Polysiloxanethern, Alkindiolethoxylaten und beliebigen Mischungen hiervon, und
c) mindestens ein wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebige Mischungen hiervon, und
d) mindestens ein Additiv.

Die erfindungsgemäßen Trockenpräparationen liegen vorzugsweise in Form eines, insbesondere wasserfreien, Pulvers oder Granulats vor.

Man erhält die erfindungsgemäßen Trockenpräparationen in besonders zweckmäßigen Ausgestaltungen durch geeignete Trocknungsverfahren wie zum Beispiel Sprühtrocknung, Gefriertrocknung oder Walzentrocknung, vorzugsweise durch Sprühtrocknung und Gefriertrocknung. Hierfür setzt man als Ausgangssubstrat bevorzugt ein wässriges oder ein lösemittelhaltiges System ein. Das wässrige System, das der Sprühtrocknung oder der Gefriertrocknung unterworfen wird, verfügt bevorzugt über einen pH-Wert von größer oder gleich 9,0, bevorzugt im Bereich von 10,0 bis 12.0 und besonders bevorzugt im Bereich von 10,5 bis 11,5, oder ist auf einen pH Wert größer oder gleich 9,0, bevorzugt im Bereich von 10,0 bis 12.0 und besonders bevorzugt im Bereich von 10,5 bis 11,5, eingestellt.

Werden für die Herstellung der erfindungsgemäßen Trockenpräparationen wässrige Zusammensetzungen eingesetzt, liegt in einer zweckmäßigen Ausgestaltung Wasser hierin, bezogen auf das Gesamtgewicht dieser Zusammensetzung, vorzugsweise in einer Menge im Bereich von 10 bis 90 Gew.-% und besonders bevorzugt im Bereich von 25 bis 80 Gew.-% vor.

Die erfindungsgemäßen Trockenpräparationen, insbesondere wenn mittels Sprühtrocknung oder Gefriertrocknung erhalten, besitzen im Allgemeinen eine Restfeuchte, bezogen auf das Gesamtgewicht der Trockenpräparation, von 5 Gew.% oder weniger, bevorzugt von 3 Gew.% oder weniger und besonders bevorzugt von 1,5 Gew.% oder weniger.

Ein wässriges Lösemittel bzw. ein wässriges System im Sinne der vorliegenden Erfindung enthält als flüssige Komponente vorzugsweise ausschließlich Wasser. Wässrige Systeme im Sinne der Erfindung umfassen aber auch Wasser enthaltende Zusammensetzungen, die darüber hinaus wasserlösliche (bei 22 °C) Lösemittel wie Methanol, Ethanol oder Aceton enthalten, zumeist als Mindermenge.

Ein lösemittelhaltiges System im Sinne der Erfindung umfasst zum einen ein Lösemittel bzw. ein Gemisch an miteinander löslichen Lösemitteln, welches bzw. welche in Wasser löslich sind (bei 22 °C). Darüber hinaus sind lösemittelhaltige Systeme im Sinne der Erfindung auch solche, die auf einem mit Wasser nicht löslichen Lösemittel oder auf einem Gemisch an miteinander löslichen Lösemitteln, das bzw. die nicht in Wasser löslich sind (bei 22 °C), basieren.

Es wurde überraschend gefunden, dass sich wässrige sowie lösemittelhaltige Zusammensetzungen wie Farbton- und Extenderzusammensetzungen, beispielsweise mittels Sprühtrocknung oder Gefriertrocknung in eine Trockenpräparation überführen lassen, die über lange Zeiträume lagerfähig sind, ohne dabei Zersetzungs- oder Umwandlungsreaktionen zu zeigen. Vielfach hat es sich als zweckmäßig erwiesen, die Trockenpräparation, insbesondere Trockenpigmentpräparation, beispielsweise mittels Mahlens, in Pulverform zu überführen.

Exemplarisch seien als geeignete Pigmente (erste Alternative der Komponente a)) anorganische Pigmente wie Bunt-, Schwarz- und Weißpigmente (Farbpigmente) sowie Glanzpigmente und organische Pigmente wie Bunt- und Schwarzpigmente genannt.

Als geeignete anorganische Weißpigmente kommen zum Beispiel Titandioxid, Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat.

Besonders geeignete Pigmente umfassen zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Als geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.1. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pig-ment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Grundsätzlich können geeignete Füllstoffe (zweite Alternative der Komponente a)) ausgewählt werden aus der Gruppe bestehend aus calcitischen Füllstoffen, insbesondere Calciumcarbonate, Dolomite, Calcite und/oder Aragonite, silikatischen Füllstoffen, insbesondere Quarzite, Schichtsilikate, Feldspate, Vulkanite und/oder Kieselerden wie Kieselgur und Diatomeenerden, sulfatischen Füllstoffen, insbesondere Bariumsulfat, chemisch modifizierten Füllstoffen und aus beliebigen Mischungen dieser Füllstoffe. Werden Schichtsilikate als Füllstoffe eingesetzt, handelt es sich hierbei in der Regel um solche, in die Wasser unter Normaldruck- und Raumtemperaturbedingungen nicht eingelagert wird und die demgemäß nicht als Verdicker fungieren können.

Erfindungsgemäße Trockenpräparationen, die mindestens ein Pigment und/oder mindestens ein Pigment enthalten, werden im Sinne der vorliegenden Erfindung auch Trockenpigmentpräparationen genannt. Während aus Trockenpigmentpräparationen enthaltend Pigmente (und gegebenenfalls Füllstoffe) regelmäßig wässrige oder lösemittelhaltige Farbtonzusammensetzungen zugänglich sind, setzt man Trockenpigmentpräparationen enthaltend Füllstoffe, jedoch keine Pigmente, für die Herstellung wässriger oder lösemittelhaltiger Extenderzusammensetzungen ein.

Für die Netz- und/oder Dispergiermittel (Komponente b)) der erfindungsgemäßen Trockenpräparationen, insbesondere in den im Wesentlichen konservierungsmittelfreien Trockenpigmentpräparationen, greift man auf solche zurück, die ausgewählt sind aus der Gruppe bestehend aus Polycarboxylaten, insbesondere Salze von Polyacrylsäuren, Polyphosphaten, insbesondere lineare Polyphosphate und/oder zyklische Metaphosphate, Polyetherphosphaten, Polycarbonsäurepolymeren, Acrylblockcopolymeren, insbesondere CFRP-basierten Acrylblockcopolymeren, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiolethoxylaten, Fluortensiden und beliebigen Mischungen hiervon. Besonders bevorzugt unter den geeigneten Netz- und Dispergiermitteln sind Polyetherphosphate, Kaliumsalze von Polycarbonsäurepolymeren, CFRP-basierte Acrylblockcopolymere, ethoxylierte Fettalkohole und/oder nichtionische gesättigte langkettige Alkohole. CFRP-basierte Acrylblockpolymere sind dabei solche, die mittels Con*trolled Free Radical Polymerisation* hergestellt worden sind. Gegenüber der konventionellen radikalischen Polymerisation handelt es sich bei dem CFRP-Verfahren um eine sogenannte lebende Polymerisation, auch bekannt als *Living Radical Polymerisation* (LRP). Herbei können radikale reversibel geformt werden, und zwar sowohl auf der Stufe der Initiierung der Radikalbildung wie auch bei nachfolgenden Propagationsschritten erfolgen.

Als Komponente c) kommen wasserlösliche Alkylsilikonate, Monoalkylsilantriole, Dialkylsilandiole, Trialkylsilanole, Alkalisalze von Monoalkylsilantriolen, Dialkylsilandiolen oder Trialkylsilanolen oder beliebige Mischungen hiervon zum Einsatz.

Geeignete Alkylsilikonate umfassen z.B. Verbindungen der Formel HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpropylsilikonat genannt. Als besonders vorteilhaft hat sich hier Kaliummethylsilikonat erwiesen. Der Trockenanteil an Alkylsilikonaten wie Kaliummethylsilikonaten in den erfindungsgemäßen Trockenpräparationen, insbesondere in den im Wesentlichen konservierungsmittelfreien Trockenpigmentpräparationen, liegt regelmäßig im Bereich von 0,01 bis 10 Gew.-%, vorzugsweise 0,07 bis 4 Gew.-% und besonders bevorzugt 0,15 bis 2 Gew.-% (Feststoffanteil bzw., sofern bei 20°C nicht als Feststoff vorliegend, die nicht-wässrigen Wirkstoffanteile).

Als Additive (Komponente d)) können grundsätzlich herkömmliche Additive, wie sie für wässrige Abtönmaterialien verwendet werden, eingesetzt werden. Exemplarisch können geeignete Additive ausgewählt sein aus der Gruppe bestehend aus Entschäumern, Stabilisatoren, Flammschutzmitteln, Hydrophobierungsmitteln, Mattierungsmitteln, insbesondere Fällungskieselsäure, Rheologieadditiven, insbesondere Verdickern, Oberflächenadditiven, insbesondere Silikonoberflächenadditiven, beispielsweise polyethermodifiziertes Polymethylalkylsiloxan und/oder Silikonpolyether-Copolymere, Puffersubstanzen, Feuchthaltemittel, Wachse, Neutralisationsmittel, pH-Regulatoren, UV-Absorbern, Radikalfängern und Mischungen dieser Verbindungen. Die erfindungsgemäßen Trockenpräparationen, insbesondere im Wesentlichen konservierungsmittelfreien Trockenpigmentpräparationen, enthalten als Additive vorzugsweise mindestens einen Verdicker und/oder einen Entschäumer. Besonders bevorzugt liegen in den erfindungsgemäßen Trockenpräparationen, insbesondere in den im Wesentlichen konservierungsmittelfreien Trockenpigmentpräparationen, sowohl Verdicker wie auch Entschäumer vor. Unter Verdicker im Sinne der vorliegenden Erfindung sollen auch rheologiebeeinflussende Schichtsilikate, organisch modifizierte Schichtsilikaten, zum Beispiel Bentonite oder Hectorite, pyrogene Kieselsäure, zum Beispiel Aerosile, und thixotrope Alkydharze verstanden werden. Diese Substanzen können einzeln wie auch in einer beliebigen Mischung als Verdicker eingesetzt werden. Unter rheologiebeeinflussende Schichtsilikate im Sinne der vorliegenden Erfindung sollen solche Schichtsilikate verstanden werden, bei denen Wasser in die Schichtsilikate eingelagert werden kann und die aufgrund dieser Eigenschaft als Verdicker fungieren können. Die genannten rheologiebeeinflussenden Schichtsilikate und die organisch modifizierten Schichtsilikate können auch unter der Bezeichnung Schichtsilikat-Verdicker zusammengefasst werden.

Die genannten Additive liegen in einer bevorzugten Ausgestaltung in den erfindungsgemäßen Trockenpräparationen, insbesondere in den im Wesentlichen konservierungsmittelfreien Trockenpigmentpräparationen, in einer Menge im Bereich von 0,001 bis 25 Gew.-%, vorzugsweise im Bereich von 0,01 bis 13,5 Gew.-% und besonders bevorzugt im Bereich von 0,1 bis 8,5 Gew.-% vor, jeweils bezogen auf den Feststoffanteil bzw., sofern diese Additive bei Raumtemperatur nicht als Feststoff vorliegen sollten, auf den nicht-wässrigen Wirkstoffanteil dieser Additivkomponenten.

Geeignete Verdicker können ferner ausgewählt werden aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, Polysaccharid-Verdickern, insbesondere Xanthan und/oder Agar Agar, und beliebigen Mischungen hiervon. Besonders bevorzugt wird auf Polysacharid-Verdicker, insbesondere Xanthan, zurückgegriffen.

Geeignete Verdickersysteme können z.B. auch auf der kombinierten Verwendung von rheologiebeeinflussenden Schichtsilikaten und/oder organisch modifizierten Schichtsilikaten, insbesondere organisch modifizierten Schichtsilikaten, und Polysaccharid-verdickern, insbesondere Xanthan, basieren.

In einer zweckmäßigen Ausführungsform enthält die erfindungsgemäße Trockenpräparation mindestens ein Konservierungsmittel, das sich unter alkalischen Bedingungen zersetzt. Hierbei sind solche Trockenpräparationen bevorzugt, bei denen neben dem mindestens einen Konservierungsmittel, das sich unter alkalischen Bedingungen zersetzt, keine weiteren Konservierungsmittel zugegen sind.

Im Sinne der Erfindung wird unter einem Konservierungsmittel, das sich unter alkalischen Bedingungen zersetzt, vorzugsweise ein solches verstanden, dass sich bei einem pH-Wert größer oder gleich 9,0, vorzugsweise größer oder gleich 10,0, mit einer Halbwertszeit kleiner 25 Tagen, vorzugsweise kleiner oder gleich 5 Tagen und besonders bevorzugt kleiner oder gleich 3 Tagen, zersetzt.

Unter den Konservierungsmitteln, die sich unter alkalischen Bedingungen zersetzen sind Isothiazolinone besonders geeignet. Unter diesen wird wiederum bevorzugt zurückgegriffen auf diejenigen, die ausgewählt sind aus der Gruppe bestehend aus 2-Methyl-isothiazolin-3-on (MIT), 5-Chlor-2-methyl-4-isothiazolin-3-on (CIT) und deren beliebigen Mischungen.5-Chlor-2-methyl-4-isothiazolin-3-on (CIT) ist besonders bevorzugt.

Auch solche erfindungsgemäßen Trockenpräparation sind bevorzugt, die im Wesentlichen frei von Topfkonservierungsmitteln, bevorzugt frei von Topf- und Filmkonservierungsmitteln, besonders bevorzugt frei von organischen bioziden Konservierungsmitteln und insbesondere frei von jeglichen Konservierungsmitteln, sind. Gemäß einer zweckmäßigen Ausgestaltung der Erfindung werden erfindungsgemäße Trockenpräparationen dabei im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf (5-Chlor-2-methyl-4-isothiazolin) in einer Menge kleiner 0,5 ppm enthalten sind.

Die erfindungsgemäßen Trockenpräparationen können ferner Wasserglas und/oder Kieselsol enthalten. Diese Komponenten können zur Einstellung des pH-Wertes der aus diesen Trockenpräparationen zugänglichen wässrigen oder lösemittelhaltigen Zusammensetzungen eingesetzt werden, aber auch als anorganische Bindemittel fungieren. Das Wasserglas ist hierbei bevorzugt ausgewählt aus der Gruppe bestehend aus Natrium-, Kalium- und Lithiumwasserglas. Selbstverständlich können auch beliebige Mischungen unterschiedlicher Wassergläser eingesetzt werden. Bevorzugt wird für die erfindungsgemäßen Trockenpräparationen auf Kaliumwasserglas zurückgegriffen. Bei Wasserglas handelt es sich zum Beispiel um Reaktionsprodukte aus Alkalicarbonaten bzw. -hydroxiden mit Quarzsand. Diese werden kommerziell häufig in Form wässriger Lösungen angeboten. In diesen kommerziell erhältlichen wässrigen Lösungen liegt das Wasserglas im Allgemeinen mit einem Feststoffanteil von 28 Gew.-% vor. Wasserglas kann alternativ auch in Pulverform eingesetzt werden. Sofern Wasserglas für die Herstellung der erfindungsgemäßen Trockenpräparationen zum Einsatz kommt, liegt dieses in den hierbei verwendeten wässrigen Zusammensetzungen regelmäßig im Bereich von 0,1 bis 3,5 Gew.-%, vorzugsweise im Bereich von 0,3 bis 2,4 Gew-% und besonders bevorzugt im Bereich von 0,6 bis 1,8 Gew.-% vor, jeweils bezogen auf das Gesamtgewicht der eingesetzten wässrigen Zusammensetzung und unter Zugrundelegung des Trockengewichtsanteils des Wasserglases.

Geeignete Kieselsole sind dem Fachmann bekannt. Kieselsole sind im Handel in Form von wässrigen kolloidalen Suspensionen von Polykieselsäuremolekülen erhältlich. Das in wässrigen Systemen vorliegende Kieselsol ist vorzugsweise alkalisch und hat besonders bevorzugt pH-Wert größer 9.

Neben Wasserglas und/oder Kieselgel können die erfindungsgemäßen Trockenpräparationen auch geeignete weitere Basen wie Alkali- oder Erdalkalihydroxide, z.B. Kaliumliydroxid, und/oder Aminverbindungen, wie z.B. 2-Amino-2-ethyl-1, 3-propandiol, enthalten.

Besonders bevorzugte erfindungsgemäße Trockenpräparationen enthalten a) mindestens ein Pigment und/oder mindestens einen Füllstoff, b) mindestens ein Netz-und/oder Dispergiermittel, c) mindestens ein wasserlösliches Alkylsilikonat, insbesondere Kaliummethylsilikonat, und d) mindestens ein Additiv ausgewählt aus der Gruppe bestehend aus mindestens einem Verdicker, bevorzugt Polysaccharid-Verdickern und/oder Schichtsilikat-Verdickern, besonders bevorzugt organisch modifizierten Schichtsilikaten, mindestens einem Entschäumer, mindestens ein Feuchthaltemittel, insbesondere Polyalkylenglykole, mindestens einem Wachs und beliebigen Mischungen hiervon.

Die erfindungsgemäßen Trockenpräparationen enthalten in einer zweckmäßigen Ausgestaltung mindestens ein Feuchthaltemittel, insbesondere Polyalkylenglykole, und/oder mindestens ein Wachs. Unter den geeigneten Feuchthaltemitteln greift man z.B. auf Ethylenglykol, Propylenglykol, Diethylenglykole, Glyzerin, Dipropylenglykole, Polyethylenglykole, Polypropylenglykole, Amide, Ether, Etherderivate, Carboxylsäuren, Ester, Alkohole, Karbitol, insbesondere Butylkarbitol, Cellosolve, Aminoalkohole, Ketone oder deren beliebige Mischungen zurück.

Ferner können die erfindungsgemäßen Trockenpräparationen auch mindestens ein Bindemittel enthalten. Hierbei kann es sich um ein anorganisches Bindemittel, beispielsweise Wasserglas und/oder Kieselsol, wie vorangehend bereits spezifiziert, oder auch um ein organisches Bindemittel handeln.

Zweckmäßige organische Bindemittel gehen dabei zurück auf wässrige Dispersionen auf Basis von Polymeren, enthaltend Acrylate, Vinylacetat und/oder Styrol, insbesondere auf Basis von Reinacrylaten und/oder Terpolymeren. Auch können geeignete Bindemittel auf sogenannten Hybridbindemitteln, insbesondere in Form wässriger Organosilikat-Hybriddispersionen, basieren. Auch kommen als Bindemittel Stärke-und/oder Stärkehybridbindemittel in Betracht. Alternativ oder zusätzlich können als geeignete Bindemittel auch Acrylharze, Acrylsilikonharze, Silikonharze, Urethanharze, ungesättigte Polyesterharze oder Alkydharze sowie deren Mischungen zum Einsatz kommen.

Grundsätzlich kommen als geeignete organische Bindemittel für die erfindungsgemäßen Trockenpräparationen Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten in Betracht. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer besonders zweckmäßigen Ausgestaltung zunächst in Form einer wässrigen Bindemitteldispersion zur Verfügung gestellt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, und gegebenenfalls Vinylaromaten, insbesondere Styrol. Geeignete Acrylatbindemittel verfügen in einer zweckmäßigen Ausgestaltung über eine Molmasse im Bereich von 300.000 g/mol und darüber. Besonders geeignete organische Bindemittel weisen eine Mindestfilmbildetemperatur (MFT-Wert), bestimmt gemäß ISO 2115:1996 (Ausgabedatum: 2001-04), kleiner oder gleich 10, insbesondere kleiner oder gleich 7 und besonders bevorzugt kleiner gleich 5 auf. Der Trockengewichtsanteil dieser organischen Bindemittel kann grundsätzlich in weiten Bereichen variiert werden.

Solche erfindungsgemäßen Trockenpräparationen haben sich als besonders zweckmäßig erwiesen, enthaltend 20,0 bis 98,0 Gew.-%, vorzugsweise 40,0 bis 96,0 Gew.-% und besonders bevorzugt 60,0 bis 95,0 Gew,-%, an Komponente a), 0,05 bis 30 Gew.-%, vorzugsweise 0,5 bis 25 Gew.-% und besonders bevorzugt 1 bis 20 Gew.-%, an Komponente b, 0,01 bis 10,0 Gew.-%, vorzugsweise 0,07 bis 4 Gew.-% und besonders bevorzugt 0,15 bis 2 Gew.-%, an Komponente c) und 0,001 bis 25 Gew.-%, vorzugsweise 0,01 bis 13,5 Gew.-% und besonders bevorzugt 0,1 bis 8,5 Gew.-%, an Komponente d), insbesondere ausgewählt aus der Gruppe bestehend aus Verdickern, Entschäumern, Feuchthaltemitteln, Wachsen, und beliebigen Mischungen hiervon, wobei die Anteile der die Trockenpräparation bildenden Komponenten Feststoffanteile oder, sofern bei 20°C nicht als Feststoff vorliegend, die nicht-wässrigen Wirkstoffanteile darstellen und wobei die Menge an die Trockenpräparation bildenden Komponenten stets so gewählt wird, dass sich in der Summe 100,0 Gew.-% ergeben.

Die erfindungsgemäßen Trockenpräparationen, z.B. in einer zweckmäßigen Ausgestaltung in Form konservierungsmittelfreier Trockenpräparationen, insbesondere Trockenpigmentpräparationen, werden für die Herstellung von wässrigen und lösemittelhaltigen Zusammensetzungen, bevorzugt von wässrigen Zusammensetzungen, vorzugsweise in Form von Farbtonzusammensetzungen oder Extenderzusammensetzungen, eingesetzt.

Besonders kommen die erfindungsgemäßen, insbesondere konservierungsmittelfreien, Trockenpräparationen, insbesondere Trockenpigmentpräparation, dabei für die Herstellung, insbesondere Einfärbung, von, bevorzugt konservierungsmittelfreien, wasserbasierten oder lösemittelhaltigen Anstrich- oder Putzsystemen zum Einsatz, insbesondere von abgetönten wässrigen Lasuren, Wasserlacken, lösemittelhaltigen Lasuren, Lösemittellacken, Anstrichfarben, insbesondere Dispersionsfarben, besonders bevorzugt Dispersionsaußenfarben, Kalkfarben, Silikatfarben, Silikonharzfarben, Dispersionssilikatfarben, Sol-Silikat-Farben und/oder Nano-Hybridfarben, insbesondere auf Basis einer wässrigen Organosilikat-Hybrid-Dispersion, Bodenbeschichtungen oder Putzen, insbesondere Silikonharzputze, Silikatputze, Sol-Silikat-Putze, Leichtputze, Organosilikat-Hybriddispersionsputze und/oder Kunstharzputze.

Die erfindungsgemäßen Trockenpräparationen zeichnen sich insbesondere auch dadurch aus, dass sie auch erst am Point of Sale oder am Point of Use für die vorangehend genannten Verwendungen zur Verfügung gestellt werden müssen.

Die der Erfindung zugrunde liegende Aufgabe wird auch gelöst durch ein Verfahren zur Herstellung einer wässrigen oder lösemittelhaltigen Zusammensetzung, insbesondere Farbtonzusammensetzung oder Extenderzusammensetzung, für ein Abtönsystem, umfassend die Schritte
i) Zurverfügungstellung einer erfindungsgemäßen, insbesondere konservierungsmittelfreien, Trockenpräparation, insbesondere Trockenpigmentpräparation,
ii) Zurverfügungstellung von Wasser und/oder mindestens einem bei 22 °C wasserlöslichen Lösemittel oder von mindestens einem bei 22 °C in Wasser nicht löslichen Lösemittel, und
iii) Vermischen der Trockenpräparation gemäß i) mit Wasser und/oder s dem mindestens einen bei 22 °C wasserlöslichen Lösemittel oder mit dem mindestens einen bei 22 °C in Wasser nicht löslichen Lösemittel unter Erhalt einer Farbtonzusammensetzung oder einer Extenderzusammensetzung für ein Abtönsystem.

Von besonderem Vorteil bei der vorliegenden Erfindung ist auch, dass die Trockenpräparationen frei von organischen bioziden Konservierungsmitteln sein können. Es ist mit den erfindungsgemäßen Trockenpräparationen demgemäß nicht mehr erforderlich, auf Topfkonservierungsmittel bzw. auf Topf- und Filmkonservierungsmittel zurückgreifen zu müssen.

Die der Erfindung zugrunde liegende Aufgabe wird ferner gelöst durch ein Verfahren zur Herstellung eines abgetönten oder extendierten Anstrich- oder Putzsystems, insbesondere konservierungsmittelfreien Anstrich- oder Putzsystems, umfassend die Schritte
1a) Zurverfügungstellung einer lösemittelhaltigen Zusammensetzung, insbesondere Farbtonzusammensetzung oder Extenderzusammensetzung, für ein Abtönsystem, erhalten oder erhältlich nach dem erfindungsgemäßen Verfahren,
2a) Zurverfügungstellung einer Abtönbasiszusammensetzung, insbesondere bestehend aus oder enthaltend mindestens ein Bindemittel sowie gegebenenfalls mindestens ein Lösemittel und gegebenenfalls mindestens ein Additiv, und
3a) Vermischen der Zusammensetzung gemäß 1a)und der Abtönbasiszusammensetzung gemäß 2a) unter Erhalt eines abgetönten oder extendierten Anstrich- oder Putzsystems; oder
1b) Zurverfügungstellung einer erfindungsgemäßen Trockenpräparation,
2b) Zurverfügungstellung einer Abtönbasiszusammensetzung, insbesondere bestehend aus oder enthaltend mindestens ein Bindemittel und mindestens ein Lösemittel sowie gegebenenfalls mindestens ein Additiv, und
3b) Vermischen der Trockenpräparation gemäß 1b), insbesondere in Pulver- oder Granulatform, und der Abtönbasiszusammensetzung gemäß 2b) unter Erhalt eines abgetönten oder extendierten Anstrich- oder Putzsystems, insbesondere Eintragen der Trockenpräparation gemäß 1b) in die Abtönbasiszusammensetzung gemäß 2b).

Die aus den erfindungsgemäßen Trockenpräparationen zugänglichen wässrigen bzw. lösemittelhaltigen Zusammensetzungen können Bestandteil eines Kit-of-parts Abtönsystems sein, beispielsweise als Farbtonzusammensetzung oder Extenderzusammensetzung. In einem derartigen Kit-of-parts Abtönsystem liegt dann als weitere Komponente mindestens eine, vorzugsweise genau eine, Abtönbasiszusammensetzung, auch Abtönbase genannt, vor, beispielsweise bestehend aus oder enthaltend mindestens ein Bindemittel sowie gegebenenfalls mindestens ein Lösemittel und gegebenenfalls mindestens ein Additiv.

Diese Abtönbasiszusammensetzung des genannten Kit-of-parts Abtönsystems stellt z.B. eine wässrige Lasur, einen Wasserlack, eine lösemittelhaltige Lasur, einen Lösemittellack, eine Dispersionsfarbe, eine Kalkfarbe, eine Silikatfarbe, eine Silikonharzfarbe, eine Dispersionssilikatfarbe, einen Leichtputz, eine Bodenbeschichtung, einen Putz, insbesondere einen Silikonputz oder einen Silikatputz dar, oder bildet eine Grundrezeptur für die vorangehend genannten Systeme, Abtönbasiszusammensetzungen sind vorzugsweise ebenso wie die wässrigen oder lösemittelhaltigen Zusammensetzungen, die auf den erfindungsgemäßen Trockenpräparationen basieren, konservierungsmittelfrei.

Geeignete Lösemittel, die bei der Herstellung lösemittelbasierter Zusammensetzungen aus den erfindungsgemäßen Trockenpräparationen zum Einsatz kommen können, umfassen z.B. aromatenfreies Testbenzin und/oder Polyalkylenglykole, insbesondere Polyethylenglykole. Unter den Polyalkylenglykolen, insbesondere Polyethylenglykolen, sind solche mit einem Molgewicht größer 200 Dalton und vorzugsweise im Bereich von 300 bis 600 Dalton, bevorzugt. Bei der Herstellung von Anstrich- und Putzsystemen unter Zuhilfenahme der erfindungsgemäßen Trockenpräparationen ist es ohne weiteres möglich, erstere mit einem VOC-Gehalt kleiner 10 g/Liter und besonders bevorzugt kleiner 1 g/Liter zu erhalten.

Für die Bestimmung des VOC-Gehalts sowie für die Definition von flüchtigen organischen Verbindungen (VOC) bzw. von organischen Verbindungen kann im Sinne der vorliegenden Erfindung Rückgriff genommen werden auf die Richtlinie 2004/42/EG des europäischen Parlaments und des Rates vom 21. April 2004.

Die wasserbasierten Anstrich- und Putzsysteme, die unter Verwendung der erfindungsgemäßen Trockenpräparationen erhalten werden, werden im Sinne der Erfindung im Einklang mit der "Vergabegrundlage für Umweltzeichen" der RAL gemeinnützige GmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, wie zum Beispiel MIT und/oder BIT (1,2-Benzisothiazol-3(2H)-on), auf die Einzelsubstanz bezogen (einschließlich Formaldehyd) in einer Menge < 2 ppm, sowie auch in Bezug auf CIT (5-Chlor-2-Methyl-4-Isothiazolin) in einer Menge < 0,5 ppm enthalten sind.

Handelt es sich bei den mit Hilfe der erfindungsgemäßen Trockenpräparationen erhaltenen Anstrich- und Putzsystemen um lösemittelhaltige Systeme wie lösemittelhaltige Lasuren oder Lösemittellacke, sind diese im Sinne der Erfindung als emissions- und schadstoffarm zu bezeichnen, wenn sie der "Vergabegrundlage für Umweltzeichen" er RAL gemeinnützige GmbH betreffend "Emission- und schadstoffarme Lacke RAL-UZ 12a" (Ausgabe August 2011) genügen.

Mit der vorliegenden Erfindung sind erstmalig Trockenpräparationen wie konservierungsmittelfreie Trockenpigmentpräparationen für die Einfärbung von bevorzugt konservierungsmittelfreien wasserbasierten sowie lösungsmittelhaltigen Produkten wie Farben, Putze, Lacken, Lasuren, Spachtelmassen und sonstigen Bautenschutzprodukten zugänglich.

Als besonders vorteilhaft hat sich im Zusammenhang mit den erfindungsgemäßen Trockenpräparationen sowie den daraus erhältlichen wässrigen oder lösemittelhaltigen Zusammensetzungen herausgestellt, dass diese über einen längeren Zeitraum sehr stabil sind und nicht zu Abbau- oder Umwandlungsreaktionen neigen, und zwar insbesondere auch mit solchen Zusammensetzungen, die im Wesentlichen topfkonservierungsmittelfrei sind und sich zudem durch geringe VOC-Werte auszeichnen. Die erfindungsgemäßen Trockenpräparationen können zum Beispiel für die Herstellung von Farbtonzusammensetzungen, beispielsweise zum Abtönen- und/oder Aufhellen verwendet werden. Während die Lagerstabilität herkömmlicher wässriger oder lösemittelhaltige Farbton- und Extenderzusammensetzungen, selbst wenn mit Konservierungsmitteln versetzt, regelmäßig zeitlich begrenzt ist, verfügen die erfindungsgemäßen Trockenpräparationen über eine um ein Vielfaches höhere Lagerstabilität. Durch den Einsatz der erfindungsgemäßen Trockenpräparationen kann das Problem des mikrobiellen Befalls bzw. der Schimmelbildung in Tönmaschinen signifikant zurückgedrängt oder gar eliminiert werden, und zwar selbst bei Einsatz von im wesentlichen konservierungsmittelfreien Trockenpräparationen. Dies gilt gleichermaßen für die Probleme der Pastenantrocknung und des mikrobiellen Befalls im Vorratsgebinde der der erfindungsgemäßen Trockenpräparationen. Auch kann durch die Verwendung der erfindungsgemäßen Trockenpräparationen durch den zeitnahen Einsatz am Point of Use bzw. Point of Sale den bei herkömmlichen Flüssigpigrnentpräparationen beobachteten Problemen der Eindickung, Sedimentation und Synärese entgegengewirkt werden. Im Ergebnis lassen sich bei Verwendung der erfindungsgemäßen Trockenpräparationen Tönprobleme und Maschinenausfälle im regulären Betrieb verringern. Darüber hinaus ist von Vorteil, dass bei Einsatz der erfindungsgemäßen Trockenpräparationen aufgrund des geringeren Gewichts eine verbesserte Logistik resultiert. Auch sind die erfindungsgemäßen Trockenpräparationen weitaus weniger temperaturempfindlich als die korrespondierenden Flüssigpräparationen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Trockenpräparation, insbesondere Trockenpigmentpräparation, für eine wässrige oder lösemittelhaltige Zusammensetzung, insbesondere Farbtonzusammensetzung oder Extenderzusammensetzung, für ein Abtönsystem, bestehend aus oder enthaltend
a) mindestens ein Pigment und/oder mindestens einen Füllstoff,
b) mindestens ein Netz- und/oder Dispergiermittel, ausgewählt aus der Gruppe bestehend aus Polycarboxylaten, Polyphosphaten, Polyetherphosphaten, Polycarbonsäurepolymeren, Acrylblockcopolymeren, ethoxylierten Fettalkoholen, nichtionischen gesättigten langkettigen Alkoholen, Fettalkoholsulfaten, Alkylphosphonaten, Polysiloxanethern, Alkindiolethoxylaten und beliebigen Mischungen hiervon, und
c) mindestens ein wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebige Mischungen hiervon, sowie
d) mindestens ein Additiv.

2. Trockenpräparation nach Anspruch 1, **dadurch gekennzeichnet, dass**
das mindestens eine Additiv ausgewählt ist aus der Gruppe bestehend aus Entschäumern, Stabilisatoren, Flammschutzmitteln, Hydrophobierungsmitteln, Mattierungsmitteln, insbesondere Fällungskieselsäure, Rheologieadditiven, insbesondere Verdickern, Schichtsilikaten, organisch modifizierten Schichtsilikaten und/oder thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, Feuchthaltemittel, Wachse, Neutralisationsmittel, pH-Regulatoren, UV-Absorbern, Radikalfängern und Mischungen dieser Verbindungen, und insbesondere mindestens einen Verdicker und/oder mindestens einen Entschäumer umfasst.

3. Trockenpräparation nach Anspruch 1 oder 2, **dadurch gekennzeichnet, dass**
die Polycarboxylate Salze von Polyacrylsäuren darstellen oder dass die Polyphosphate lineare Polyphosphate und/oder zyklische Metaphosphate darstellen oder dass die Acrylblockcopolymere CFRP-basierte Acrylblockcopolymere darstellen oder dass die Polysiloxanether Methoxypolyethoxypropyltrisiloxan darstellen.

4. Trockenpräparation nach einem der vorangehenden Ansprüche, **dadurch gekennzeichnet, dass**
diese mindestens ein Konservierungsmittel, das sich unter alkalischen Bedingungen zersetzt, enthält, wobei diese Trockenpräparation vorzugsweise neben dem mindestens einen Konservierungsmittel, das sich unter alkalischen Bedingungen zersetzt, keine weiteren Konservierungsmittel enthält.

5. Trockenpräparation nach einem der vorangehenden Ansprüche, **dadurch gekennzeichnet, dass**
diese im Wesentlichen frei von Topfkonservierungsmitteln, bevorzugt frei von Topf-und Filmkonservierungsmitteln, besonders bevorzugt frei von organischen bioziden Konservierungsmitteln und insbesondere frei von jeglichen Konservierungsmitteln, ist.

6. Trockenpräparation nach einem der vorangehenden Ansprüche, **dadurch gekennzeichnet, dass**
das mindestens eine Additiv ausgewählt aus der Gruppe bestehend aus mindestens einem Verdicker, bevorzugt Polysaccharid-Verdickern und/oder Schichtsilikat-Verdickern, besonders bevorzugt organisch modifizierten Schichtsilikaten, mindestens einem Entschäumer, mindestens ein Feuchthaltemittel, insbesondere Polyalkylenglykole, mindestens einem Wachs und beliebigen Mischungen hiervon.

7. Trockenpräparation nach einem der vorangehenden Ansprüche, ferner enthaltend mindestens ein Bindemittel ausgewählt aus der Gruppe bestehend aus mindestens einem organischen Bindemittel, insbesondere ausgewählt aus der Gruppe bestehend aus Copolymeren enthaltend Acrylate, Vinylacetat und/oder Styrol, Copolymeren auf Basis von Reinacrylaten und deren Mischungen; mindestens einem anorganischen Bindemittel, insbesondere ausgewählt aus der Gruppe bestehend aus Wasserglas, Kieselsol und deren Mischungen; mindestens einem Hybridbindemittel, insbesondere Organosilikat-Hybride; mindestens einem Acrylharz, Acrylsiliconharz, Siliconharz, Urethanharz, ungesättigten Polyesterharz oder Alkydharz; und beliebigen Mischungen hiervon.

8. Trockenpräparation nach einem der vorangehenden Ansprüche, enthaltend
20,0 bis 98,0 Gew.-%, vorzugsweise 40,0 bis 96,0 Gew.-% und besonders bevorzugt 60,0 bis 95,0 Gew.-%, an Komponente a),
0,05 bis 30 Gew.-%, vorzugsweise 0,5 bis 25 Gew.-% und besonders bevorzugt 1 bis 20 Gew.-%, an Komponente b), und/oder
0,01 bis 10,0 Gew.-%, vorzugsweise 0,07 bis 4 Gew.-% und besonders bevorzugt 0,15 bis 2 Gew.-%, an Komponente c) sowie
0,001 bis 25 Gew.-%, vorzugsweise 0,01 bis 13,5 Gew.-% und besonders bevorzugt 0,1 bis 8,5 Gew.-%, an Komponente d), insbesondere ausgewählt aus der Gruppe bestehend aus Verdickern, Entschäumern, Feuchthaltemitteln, Wachsen und beliebigen Mischungen hiervon, wobei die Anteile der die Zusammensetzung bildenden Komponenten Feststoffanteile oder, sofern bei 20°C nicht als Feststoff vorliegend, die nicht-wässrigen Wirkstoffanteile darstellen und wobei die Menge an die Trockenpräparation bildenden Komponenten stets so gewählt wird, dass sich in der Summe 100,0 Gew.-% ergeben.

9. Trockenpräparation nach einem der vorangehenden Ansprüche, **dadurch gekennzeichnet, dass**
diese ein, insbesondere wasserfreies, Pulver oder Granulat darstellt.

10. Trockenpräparation nach einem der vorangehenden Ansprüche, erhalten oder erhältlich durch Sprühtrocknung oder Gefriertrocknung, bevorzugt aus einem wässrigen oder lösemittelhaltigen System, besonders bevorzugt aus einem wässrigen System.

11. Trockenpräparation nach Anspruch 10, **dadurch gekennzeichnet, dass**
das wässrige System, das der Sprühtrocknung oder der Gefriertrocknung unterworfen wird, einen pH-Wert von größer oder gleich 9,0, bevorzugt im Bereich von 10,0 bis 12.0 und besonders bevorzugt im Bereich von 10,5 bis 11,5, aufweiset oder auf einen pH Wert größer oder gleich 9,0, bevorzugt im Bereich von 10,0 bis 12.0 und besonders bevorzugt im Bereich von 10,5 bis 11,5, eingestellt ist.

12. Trockenpräparation nach einem der vorangehenden Ansprüche, **dadurch gekennzeichnet, dass**
diese eine Restfeuchte, bezogen auf das Gesamtgewicht der Trockenpräparation von 5 Gew.% oder weniger, bevorzugt von 3 Gew.% oder weniger und besonders bevorzugt von 1,5 Gew.% oder weniger aufweist.

13. Verwendung der, insbesondere konservierungsmittelfreien; Trockenpräparation, insbesondere Trockenpigmentpräparation, gemäß einem der vorangehenden Ansprüche für die Herstellung, insbesondere Einfärbung, mindestens einer wässrigen Zusammensetzung oder einer lösemittelhaltigen Zusammensetzung, insbesondere Farbtonzusammensetzung oder Extenderzusammensetzung.

14. Verwendung nach Anspruch 13, **dadurch gekennzeichnet, dass**
die, insbesondere konservierungsmittelfreie, Trockenpräparation, insbesondere Trockenpigmentpräparation, für die Herstellung, insbesondere Einfärbung, von, bevorzugt konservierungsmittelfreien, wasserbasierten oder lösemittelhaltigen Anstrich- oder Putzsystemen, insbesondere von abgetönten wässrigen Lasuren, Wasserlacken, lösemittelhaltigen Lasuren, Lösemittellacken, Anstrichfarben, insbesondere Dispersionsfarben, besonders bevorzugt Dispersionsaußenfarben, Kalkfarben, Silikatfarben, Silikonharzfarben, Dispersionssilikatfarben, Sol-Silikat-Farben und/oder Nano-Hybridfarben, insbesondere auf Basis einer wässrigen Organosilikat-Hybrid-Dispersion, Bodenbeschichtungen oder Putzen, insbesondere Silikonharzputze, Silikatputze, Sol-Silikat-Putze, Leichtputze, Organosilikat-Hybriddispersionsputze und/oder Kunstharzputze, eingesetzt wird.

15. Verwendung nach Anspruch 13 oder 14, **dadurch gekennzeichnet, dass** diese am Point of sale stattfindet.

16. Verfahren zur Herstellung einer wässrigen oder lösemittelhaltigen Zusammensetzung, insbesondere Farbtonzusammensetzung oder Extenderzusammensetzung, für ein Abtönsystem, umfassend die Schritte
i) Zurverfügungstellung einer, insbesondere konservierungsmittelfreien, Trockenpräparation, insbesondere Trockenpigmentpräparation, nach einem der Ansprüche 1 bis 12,
ii) Zurverfügungstellung von Wasser und/oder mindestens einem bei 22 °C wasserlöslichen Lösemittel oder von mindestens einem bei 22 °C in Wasser nicht löslichen Lösemittel, und
iii) Vermischen der Trockenpräparation gemäß i) mit Wasser und/oder s dem mindestens einen bei 22 °C wasserlöslichen Lösemittel oder mit dem mindestens einen bei 22 °C in Wasser nicht löslichen Lösemittel unter Erhalt einer Farbtonzusammensetzung oder einer Extenderzusammensetzung für ein Abtönsystem.

17. Verfahren zur Herstellung eines abgetönten oder extendierten Anstrich- oder Putzsystems, insbesondere konservierungsmittelfreien Anstrich- oder Putzsystems, umfassend die Schritte
1a) Zurverfügungstellung einer lösemittelhaltigen Zusammensetzung, insbesondere Farbtonzusammensetzung oder Extenderzusammensetzung, für ein Abtönsystem, erhalten oder erhältlich nach Anspruch 16,
2a) Zurverfügungstellung einer Abtönbasiszusammensetzung, insbesondere bestehend aus oder enthaltend mindestens ein Bindemittel sowie gegebenenfalls mindestens ein Lösemittel und gegebenenfalls mindestens ein Additiv, und
3a) Vermischen der Zusammensetzung gemäß 1a) und der Abtönbasiszusammensetzung gemäß 2a) unter Erhalt eines abgetönten oder extendierten Anstrich- oder Putzsystems; oder
1b) Zurverfügungstellung einer Trockenpräparation nach einem der Ansprüche 1 bis 12,
2b) Zurverfügungstellung einer Abtönbasiszusammensetzung, insbesondere bestehend aus oder enthaltend mindestens ein Bindemittel und mindestens ein Lösemittel sowie gegebenenfalls mindestens ein Additiv, und
3b) Vermischen der Trockenpräparation gemäß 1b), insbesondere in Pulver-oder Granulatform, und der Abtönbasiszusammensetzung gemäß 2b) unter Erhalt eines abgetönten oder extendierten Anstrich- oder Putzsystems, insbesondere Eintragen der Trockenpräparation gemäß 1b) in die Abtönbasiszusammensetzung gemäß 2b).

## Claims

1. A dry preparation, in particular a dry pigment preparation, for an aqueous or solvent-containing composition, in particular colour composition or extender composition, for a tinting system, consisting of or containing
a) at least one pigment and/or at least one filler,
b) at least one wetting agent and/or dispersant selected from the group consisting of polycarboxylates, polyphosphates, polyether phosphates, polycarboxylic acid polymers, acrylic block copolymers, ethoxylated fatty alcohols, nonionic saturated long-chain alcohols, fatty alcohol sulfates, alkyl phosphonates, polysiloxane ethers, alkynediol ethoxylates, and any mixtures thereof, and
c) at least one water-soluble alkyl siliconate, in particular potassium methyl siliconate, monoalkylsilanetriol, dialkylsilanediol, trialkylsilanol, alkali metal salt of monoalkylsilanetriol, in particular potassium methylsilanetriolate and/or potassium ethylsilanetriolate, dialkylsilanediol or trialkylsilanol or any mixtures thereof, and
d) at least one additive.

2. The dry preparation according to claim 1, **characterized in that**
the at least one additive is selected from the group consisting of defoamers, stabilizers, flame retardants, hydrophobing agents, matting agents, in particular precipitated silica, rheological additives, in particular thickeners, phyllosilicates, organically modified phyllosilicates and/or thixotropic alkyd resins, surface additives, in particular silicone surface additives, for example polyether-modified polymethylalkylsiloxane and/or silicone-polyether copolymers, buffer substances, humectants, waxes, neutralizing agents, pH regulators, UV absorbers, free-radical scavengers, and mixtures of these compounds, and in particular comprises at least one thickener and/or at least one defoamer.

3. The dry preparation according to claim 1 or 2, **characterized in that**
the polycarboxylates are salts of polyacrylic acids, or **in that** the polyphosphates are linear polyphosphates and/or cyclic metaphosphates, or **in that** the acrylic block copolymers are CFRP-based acrylic block copolymers, or **in that** the polysiloxane ethers are methoxypoly-ethoxypropyltrisiloxane.

4. The dry preparation according to any one of the preceding claims, **characterized in that** it contains at least one preservative that decomposes under alkaline conditions, wherein this dry preparation preferably contains no further preservatives besides the at least one preservative that decomposes under alkaline conditions.

5. The dry preparation according to any one of the preceding claims, **characterized in that** it is substantially free of in-can preservatives, preferably free of in-can and film preservatives, particularly preferably free of organic biocidal preservatives, and in particular free of any preservatives.

6. The dry preparation according to any one of the preceding claims, **characterized in that** the at least one additive is selected from the group consisting of at least one thickener, preferably polysaccharide thickeners and/or phyllosilicate thickeners, particularly preferably organically modified phyllosilicates, at least one defoamer, at least one humectant, in particular polyalkylene glycols, at least one wax, and any mixtures thereof.

7. The dry preparation according to any one of the preceding claims, further containing
at least one binding agent selected from the group consisting of
at least one organic binding agent, in particular selected from the group consisting of copolymers containing acrylates, vinyl acetate and/or styrene, copolymers based on pure acrylates, and mixtures thereof;
at least one inorganic binding agent, in particular selected from the group consisting of water glass, silica sol, and mixtures thereof;
at least one hybrid binding agent, in particular organosilicate hybrids;
at least one acrylic resin, acrylic silicone resin, silicone resin, urethane resin, unsaturated polyester resin, or alkyd resin; and any mixtures thereof.

8. The dry preparation according to any one of the preceding claims, containing
20.0 to 98.0 wt.%, preferably 40.0 to 96.0 wt.%, and particularly preferably 60.0 to
95.0 wt.%, of component a),
0.05 to 30 wt.%, preferably 0.5 to 25 wt.%, and particularly preferably 1 to 20 wt.%, of component b), and/or
0.01 to 10.0 wt.%, preferably 0.07 to 4 wt.%, and particularly preferably 0.15 to 2 wt.%, of component c), and
0.001 to 25 wt.%, preferably 0.01 to 13.5 wt.%, and particularly preferably 0.1 to 8.5 wt.%, of component d), in particular selected from the group consisting of thickeners, defoamers, humectants, waxes, and any mixtures thereof, wherein the proportions of the components forming the composition are solids contents or, if not present as a solid at 20°C, the nonaqueous active ingredient contents, and wherein the quantity of the components forming the dry preparation is always selected such that the sum amounts to 100.0 wt.%.

9. The dry preparation according to any one of the preceding claims, **characterized in that** it is a powder or granulate, in particular an anhydrous powder or granulate.

10. The dry preparation according to any one of the preceding claims, obtained or obtainable by spray drying or freeze drying, preferably from an aqueous or solvent-containing system, particularly preferably from an aqueous system.

11. The dry preparation according to claim 10, **characterized in that**
the aqueous system that is subjected to the spray drying or the freeze drying has a pH of greater than or equal to 9.0, preferably in the range from 10.0 to 12.0, and particularly preferably in the range from 10.5 to 11.5, or is adjusted to a pH of greater than or equal to 9.0, preferably in the range from 10.0 to 12.0, and particularly preferably in the range from 10.5 to 11.5.

12. The dry preparation according to any one of the preceding claims, **characterized in that**
it has a residual moisture, based on the total weight of the dry preparation, of 5 wt.% or less, preferably of 3 wt.% or less, and particularly preferably of 1.5 wt.% or less.

13. Use of the, in particular preservative-free, dry preparation, in particular dry pigment preparation, according to any one of the preceding claims for the production, in particular colouring, of at least one aqueous composition or one solvent-containing composition, in particular colour composition or extender composition.

14. Use according to claim 13, **characterized in that**
the, in particular preservative-free, dry preparation, in particular dry pigment preparation, is employed for the production, in particular colouring, of, preferably preservative-free, water-based or solvent-containing paint or plaster systems, in particular of tinted aqueous glazes, water-based lacquers, solvent-containing glazes, solvent-based lacquers, paints, in particular dispersion paints, particularly preferably exterior dispersion paints, limewash paints, silicate paints, silicone resin paints, silicate dispersion paints, sol-silicate paints and/or nano-hybrid paints, in particular based on an aqueous organosilicate hybrid dispersion, floor coatings or plasters, in particular silicone resin plasters, silicate plasters, sol-silicate plasters, lightweight plasters, organosilicate hybrid dispersion plasters and/or synthetic resin plasters.

15. Use according to claim 13 or 14, **characterized in that** it takes place at the point of sale.

16. A method for producing an aqueous or solvent-containing composition, in particular colour composition or extender composition, for a tinting system, comprising the steps of
i) providing an, in particular preservative-free, dry preparation, in particular dry pigment preparation, according to any one of claims 1 to 12,
ii) providing water and/or at least one solvent that is water-soluble at 22°C, or at least one solvent that is insoluble in water at 22°C, and
iii) mixing the dry preparation according to i) with water and/or the at least one solvent that is water-soluble at 22°C, or with the at least one solvent that is insoluble in water at 22°C, to obtain a colour composition or an extender composition for a tinting system.

17. A method for producing a tinted or extended paint or plaster system, in particular preservative-free paint or plaster system, comprising the steps of
1a) providing a solvent-containing composition, in particular colour composition or extender composition, for a tinting system, obtained or obtainable according to claim 16,
2a) providing a tinting base composition, in particular consisting of or containing at least one binding agent and optionally at least one solvent and optionally at least one additive, and
3a) mixing the composition according to 1a) and the tinting base composition according to 2a) to obtain a tinted or extended paint or plaster system; or
1b) providing a dry preparation according to any one of claims 1 to 12,
2b) providing a tinting base composition, in particular consisting of or containing at least one binding agent and at least one solvent and optionally at least one additive, and
3b) mixing the dry preparation according to 1b), in particular in powder or granulate form, and the tinting base composition according to 2b) to obtain a tinted or extended paint or plaster system, in particular introducing the dry preparation according to 1b) into the tinting base composition according to 2b).

## Revendications

1. Préparation sèche, en particulier préparation pigmentaire sèche, pour une composition aqueuse ou contenant un solvant, en particulier une composition colorante ou une composition de charge, pour un système de coloration, constituée de ou contenant
a) au moins un pigment et/ou au moins une charge,
b) au moins un agent mouillant et/ou dispersant choisi à partir du groupe constitué par les polycarboxylates, les polyphosphates, les polyéther phosphates, les polymères d'acide poly-carboxylique, les copolymères séquencés acryliques, les alcools gras éthoxylés, les alcools saturés non ioniques à longue chaîne, les sulfates d'alcools gras, les alkylphosphonates, les éthers de polysiloxane, les éthoxylates d'alkynediol, et les mélanges de ceux-ci, et
c) au moins un siliconate d'alkyle soluble dans l'eau, en particulier le méthylsiliconate de potassium, le monoalkylsilanetriol, le dialkylsilanediol, le trialkylsilanol, le sel alcalin de monoalkylsilanetriol, en particulier le méthylsilanetriolate de potassium et/ou l'éthylsilanetrio-late de potassium, le dialkylsilanediol ou le trialkylsilanol ou les mélanges de ceux-ci, et
d) au moins un additif.

2. Préparation sèche selon la revendication 1, **caractérisée en ce que**
ledit au moins un additif est choisi à partir du groupe constitué par les agents antimousse, les stabilisants, les agents ignifuges, les agents hydrofuges, les agents de matage, en particulier la silice précipitée, les additifs rhéologiques, en particulier les épaississants, les phyllosilicates, les phyllosilicates modifiés organiquement et/ou les résines alkydes thixotropes, les additifs de surface, en particulier les additifs de surface à base de silicone, par exemple le polyméthylalkylsiloxane modifié par polyéther et/ou les copolymères de polyéther de silicone, les substances tampons, les agents humidifiants, les cires, les agents neutralisants, les régulateurs de pH, les absorbeurs d'UV, les capteurs de radicaux libres, et les mélanges de ces composés, et en particulier comprend au moins un épaississant et/ou au moins un agent antimousse.

3. Préparation sèche selon la revendication 1 ou 2, **caractérisée en ce que**
les polycarboxylates sont des sels d'acides polyacryliques, ou **en ce que** les polyphosphates sont des polyphosphates linéaires et/ou des métaphosphates cycliques, ou **en ce que** les copolymères à blocs acryliques sont des copolymères à blocs acryliques à base de CFRP, ou **en ce que** les éthers de polysiloxane sont du méthoxypolyéthoxypropyltrisiloxane

4. Préparation sèche selon l'une quelconque des revendications précédentes, **caractérisée en ce qu'**elle contient au moins un conservateur qui se décompose en milieu alcalin, dans laquelle la préparation sèche ne contient de préférence aucun autre conservateur en dehors dudit au moins un conservateur qui se décompose en milieu alcalin.

5. Préparation sèche selon l'une quelconque des revendications précédentes, **caractérisée en ce qu'**elle est sensiblement exempte de conservateurs pour la protection en pot, de préférence exempte de conservateurs pour la protection en pot et en film, plus particulièrement exempte de conservateurs biocides organiques, et en particulier exempte de tout conservateur.

6. Préparation sèche selon l'une quelconque des revendications précédentes, **caractérisée en ce que** ledit moins un additif est choisi à partir du groupe constitué par au moins un épaississant, de préférence des épaississants de type polysaccharide et/ou des épaississants de type phyllosilicate, plus préférentiellement des phyllosilicates modifiés organiquement, au moins un agent antimousse, au moins un agent humidifiant, en particulier des polyalkylèneglycols, au moins une cire, et des mélanges de ceux-ci.

7. Préparation sèche selon l'une quelconque des revendications précédentes, contenant en outre au moins un agent de liaison choisi à partir du groupe constitué par
au moins agent de liaison organique, en particulier choisi à partir du groupe constitué par les copolymères contenant des acrylates, de l'acétate de vinyle et/ou du styrène, les copolymères à base d'acrylates purs, et les mélanges de ceux-ci;
au moins un agent de liaison inorganique, en particulier choisi à partir du groupe constitué par le verre soluble, le sol de silice, et les mélanges de ceux-ci;
au moins un agent de liaison hybride, en particulier des hybrides d'organosilicate;
au moins une résine acrylique, une résine silicone-acrylique, une résine de silicone, une résine d'uréthane, une résine de polyester insaturée, ou une résine alkyde; et les mélanges de celles-ci.

8. Préparation sèche selon l'une quelconque des revendications précédentes, contenant
20,0 à 98,0 % en poids, de préférence 40,0 à 96,0 % en poids, et de manière particulièrement préférée 60,0 à 95,0 % en poids, du composant a),
0,05 à 30 % en poids, de préférence 0,5 à 25 % en poids, et de manière particulièrement préférée 1 à 20 % en poids, du composant b), et/ou
0,01 à 10,0 % en poids, de préférence 0,07 à 4 % en poids, et de manière particulièrement préférée 0,15 à 2 % en poids, du composant c), et
0,001 à 25 % en poids, de préférence 0,01 à 13,5 % en poids, et de manière particulièrement préférée 0,1 à 8,5 % en poids, du composant d), en particulier choisi à partir du groupe constitué par les épaississants, les agents antimousse, les agents humidifiants, les cires, et les mélanges de ceux-ci, dans laquelle les proportions des composants formant la composition étant des composants sous forme solide ou, s'ils ne sont pas présents sous forme solide à 20°C, représentant des composants actifs non aqueux, et dans laquelle la quantité des composants formant la préparation sèche étant toujours choisie de manière à ce que le total soit de 100,0 % en poids.

9. Préparation sèche selon l'une quelconque des revendications précédentes, **caractérisée en ce qu'**il s'agit d'une poudre ou de granulés, en particulier d'une poudre ou de granulés déshydratés.

10. Préparation sèche selon l'une quelconque des revendications précédentes, obtenue ou pouvant être obtenue par séchage par atomisation ou par lyophilisation, de préférence à partir d'un système aqueux ou contenant un solvant, de manière particulièrement préférée à partir d'un système aqueux.

11. Préparation sèche selon la revendication 10, **caractérisée en ce que**
le système aqueux soumis au séchage par atomisation ou par lyophilisation présente un pH supérieur ou égal à 9,0, de préférence compris entre 10,0 et 12,0, et de manière particulièrement préférée compris entre 10,5 et 11,5, ou est ajusté à un pH supérieur ou égal à 9,0, de préférence compris entre 10,0 et 12,0, et de manière particulièrement préférée compris entre 10,5 et 11,5.

12. Préparation sèche selon l'une quelconque des revendications précédentes, **caractérisée en ce qu'**elle présente une humidité résiduelle, par rapport au poids total de la préparation sèche, inférieure ou égale à 5 % en poids, de préférence inférieure ou égale à 3 % en poids, et de manière particulièrement préférée inférieure ou égale à 1,5 % en poids.

13. Utilisation de la préparation sèche, en particulier sans conservateur, en particulier de la préparation pigmentaire sèche, selon l'une quelconque des revendications précédentes pour la fabrication, en particulier la coloration, d'au moins une composition aqueuse ou d'une composition contenant un solvant, en particulier une composition colorante ou une composition de charge.

14. Utilisation selon la revendication 13, **caractérisée en ce que**
la préparation sèche, en particulier sans conservateur, en particulier la préparation pigmentaire sèche, est utilisée pour la fabrication, en particulier la coloration, de systèmes de peinture ou d'enduits, de préférence sans conservateur, à base d'eau ou contenant des solvants, en particulier des glacis aqueux teintés, des laques à base d'eau, des glacis contenant des solvants, des laques à base de solvants, des peintures, en particulier, des peintures en dispersion, tout particulièrement des peintures en dispersion pour l'extérieur, des peintures à la chaux, des peintures silicatées, des peintures à base de résine silicone, des peintures en dispersion silicatées, des peintures sol-silicate et/ou des peintures nano-hybrides, en particulier à base d'une dispersion aqueuse hybride d'organosilicate, des revêtements de sol ou des enduits, en particulier des enduits de résine silicone, des enduits silicates, des enduits sol-silicates, des enduits légers, des enduits en dispersion hybride d'organosilicate et/ou des enduits de résine synthétique.

15. Utilisation selon la revendication 13 ou 14, **caractérisée en ce qu'**elle a lieu au point de vente.

16. Procédé de production d'une composition aqueuse ou contenant un solvant, en particulier d'une composition colorante ou d'une composition de charge, pour un système de coloration, comprenant les étapes suivantes
i) la fourniture d'une préparation sèche, en particulier sans conservateur, en particulier d'une préparation pigmentaire sèche, selon l'une quelconque des revendications 1 à 12,
ii) la fourniture de l'eau et/ou d'au moins un solvant soluble dans l'eau à 22°C, ou d'au moins un solvant insoluble dans l'eau à 22°C, et
iii) le mélange de la préparation sèche selon i) avec de l'eau et/ou le solvant soluble dans l'eau à 22°C, ou avec le solvant insoluble dans l'eau à 22°C, pour obtenir une composition colorante ou une composition de charge pour un système de coloration.

17. Procédé de fabrication d'un système de peinture ou d'enduit teinté ou étendu, en particulier d'un système de peinture ou d'enduit sans conservateur, comprenant les étapes suivantes
1a) la fourniture d'une composition contenant un solvant, en particulier une composition colorante ou une composition de charge, pour un système de coloration, obtenue ou pouvant être obtenue selon la revendication 16,
2a) la fourniture d'une composition de base colorante, en particulier constituée ou contenant au moins un agent de liaison et éventuellement au moins un solvant et éventuellement au moins un additif, et
3a) le mélange de la composition selon 1a) et la composition de base colorante selon 2a) pour obtenir un système de peinture ou d'enduit teinté ou étendu; ou
1b) la fourniture d'une préparation sèche selon l'une quelconque des revendications 1 à 12,
2b) la fourniture d'une composition de base colorante, en particulier constituée ou contenant au moins un agent de liaison et au moins un solvant et éventuellement au moins un additif, et
3b) le mélange de la préparation sèche selon 1b), en particulier sous forme de poudre ou de granulés, et la composition de base colorante selon 2b) pour obtenir un système de peinture ou d'enduit teinté ou étendu, en particulier l'introduction de la préparation sèche selon 1b) dans la composition de base colorante selon 2b).
